# FASCICULE DE BREVET EUROPEEN

(11) **EP 1 817 534 B1**
(45) Date de publication et mention de la délivrance du brevet: **02.12.2009**
(21) Numéro de dépôt: 05824495.5
(22) Date de dépôt: 30.11.2005
(51) Int. Cl.: F28D 20/02, F28D 1/03, F28D 1/053

(54) **ECHANGEUR DE CHALEUR AVEC ACCUMULATEUR THERMIQUE**
WÄRMETAUSCHER MIT WÄRMESPEICHERUNG
HEAT EXCHANGER WITH HEAT STORAGE

(30) Priorité: 30.11.2004 FR 0412682; 30.11.2004 FR 0412680
(43) Date de publication de la demande: 15.08.2007
(73) Titulaire: VALEO SYSTEMES THERMIQUES SAS, 78321 Le Mesnil Saint-Denis Cedex (FR)
(72) Inventeur: MOREAU, Sylvain, F-72700 Spay (FR); THUEZ, Jean-Luc, F-78112 Fourqueux (FR); HALLER, Régine, F-78490 Boissy Sans Avoir (FR)
(86) Numéro de dépôt international: PCT/FR2005/002990
(87) Numéro de publication internationale: WO 2006/059005

(56) Documents cités:
- EP-A- 1 221 389
- FR-A- 2 847 973
- US-A- 4 679 410
- US-A1- 2002 002 837
- PATENT ABSTRACTS OF JAPAN vol. 2000, no. 10, 17 novembre 2000 (2000-11-17) -& JP 2000 205777 A (DENSO CORP), 28 juillet 2000 (2000-07-28)

## Description

L'invention a trait à un échangeur de chaleur, par exemple utilisé dans le domaine automobile et plus particulièrement à un échangeur de chaleur comprenant une pluralité de tubes de circulation de fluide caloporteur, les extrémités desdits tubes débouchant dans des collecteurs et des réservoirs de matériau de stockage thermique en contact avec les tubes de manière que le matériau de stockage et le fluide caloporteur échangent de la chaleur entre eux.

Un échangeur de chaleur a pour fonction d'assurer un échange de chaleur entre un fluide en circulation à l'intérieur d'une pluralité de tubes, appelé fluide caloporteur, et un fluide extérieur traversant l'échangeur de chaleur. Dans le cas d'un système de climatisation de véhicule automobile, le fluide extérieur peut être de l'air destiné à être soufflé dans l'habitacle du véhicule. L'échange de chaleur permet de rafraîchir l'air soufflé.

Les tubes débouchent classiquement dans des collecteurs, dont une fonction est de mettre en communication de fluide tout ou partie de cette pluralité de tubes.

L'échangeur de chaleur est relié au reste d'un circuit de circulation de fluide, par exemple un circuit de climatisation pour véhicule automobile. La circulation du fluide à l'intérieur du circuit est assurée par un compresseur entraîné directement par le moteur du véhicule automobile.

Par conséquent, lorsque le moteur du véhicule est arrêté, la circulation du fluide dans le circuit n'a plus lieu, et l'échange de chaleur entre l'air et le fluide caloporteur ne peut s'opérer. L'air soufflé dans l'habitacle du véhicule n'est alors plus rafraîchi. Cette situation est d'autant plus problématique que des systèmes d'économie de carburant récents prévoient l'arrêt automatique du moteur lorsque la voiture s'immobilise, privant fréquemment l'habitacle d'air rafraîchi.

Il est connu, notamment de JP2000205777A, de pourvoir un échangeur de chaleur de réservoirs de matériau de stockage thermique associés aux tubes de circulation de fluide caloporteur.

Par exemple, la demande de brevet français FR 2 847 973 prévoit un échangeur de chaleur muni de tubes particuliers présentant une pluralité de canaux de circulation de fluide caloporteur ainsi qu'une pluralité de cavités longitudinales jouxtant lesdits canaux. Ces cavités longitudinales reçoivent un matériau de stockage thermique, tandis que les canaux assurent la circulation du fluide réfrigérant. Par contact entre les cavités et les canaux, le matériau de stockage et le fluide caloporteur peuvent échanger de la chaleur entre eux.

Ainsi, lorsque le moteur du véhicule est en marche, le fluide réfrigérant refroidit à la fois l'air traversant l'échangeur de chaleur et le matériau de stockage thermique. Le matériau de stockage thermique restitue le froid (plus précisément des frigories) à l'air traversant l'échangeur de chaleur, lorsque le moteur est coupé.

Bien que ces tubes particuliers aient donné satisfaction, leur fabrication est relativement complexe et coûteuse.

L'un des objets de l'invention est de surmonter les inconvénients précités en proposant un échangeur de chaleur d'un type nouveau qui comprend une pluralité d'éléments d'échange thermique logeant chacun au moins un réservoir et au moins un tube, intercalés.

Ainsi, le matériau de stockage thermique entoure au moins partiellement les tubes de fluide caloporteur améliorant l'échange de chaleur entre ce matériau et ce fluide. Dans un mode de réalisation qui ne constitue pas l'invention telle que revendiquée, les collecteurs sont constitués d'un ensemble d'embouts de tube, chaque embout présentant des moyens de jonction avec un autre embout aptes à assurer le passage du fluide caloporteur d'un embout de tube à l'autre. Ceci permet d'obtenir des collecteurs d'encombrement réduit.

Dans ce cas, chaque embout présente de préférence une face de jonction agencée pour s'appuyer contre une face de jonction d'un embout de tube adjacent, chaque face de jonction étant pourvue d'une ouverture de passage de fluide coïncidant avec l'ouverture de passage de fluide de la face de jonction de l'embout de tube adjacent. Cette configuration offre un encombrement plus réduit encore.

Il est alors avantageux que chaque embout de tube de circulation de fluide soit constitué de deux pattes symétriques présentant chacune une face de jonction ainsi qu'une face d'appui, les faces d'appui venant en contact l'une sur l'autre. Dans ce cas, un tube peut être coincé entre les pattes symétriques de l'embout de tube.

Dans un autre mode de réalisation de l'invention qui ne constitue pas l'invention telle que revendiquée, ledit élément d'échange thermique est constitué d'un réservoir d'allure générale tubulaire à l'intérieur duquel est logé un tube. La fabrication d'un tel échangeur de chaleur est considérablement simplifiée et peu coûteuse. En effet, il suffit de réaliser des tubes et de leur adjoindre un réservoir tubulaire facile à fabriquer. En particulier, les réservoirs et les tubes peuvent être réalisés de manière séparée.

Avantageusement, le tube est alors disposé dans une zone centrale du réservoir ménageant deux volumes de stockage de matériau de stockage thermique de part et d'autre dudit tube, de manière à permettre un bon échange de chaleur entre le fluide caloporteur et le matériau de stockage thermique.

De manière optionnelle, l'échangeur de chaleur peut comprendre au moins un intercalaire de forme ondulée apte à se loger dans l'un des volumes de stockage d'un réservoir entre le tube et ledit réservoir. L'intercalaire permet ainsi de réaliser un cloisonnement du volume de stockage dans lequel il est logé.

Dans une réalisation avantageuse qui ne constitue pas l'invention telle que revendiquée, chaque tube de circulation de fluide caloporteur présente deux faces latérales parallèles entre elles, chaque réservoir présente deux faces latérales parallèles entre elles et chacune des faces latérales d'un tube est en contact surfacique avec l'une des faces latérales d'un réservoir: Ainsi, on utilise pour la fabrication d'un tel échangeur de chaleur, des tubes connu sous le terme de "tube plat". Alors, le réservoir peut prendre la forme d'un tube plat de plus grande dimension. Le contact surfacique permet d'assurer un bon transfert de chaleur entre le tube et le réservoir, ce qui est important pour le bon fonctionnement de l'échangeur lorsque le moteur est en marche, comme on le verra plus avant.

Une configuration intéressante prévoit que les extrémités des tubes dépassent des réservoirs, et que chaque réservoir soit muni de moyens de fermeture agencés pour permettre le passage d'un tube.

Les moyens de fermeture peuvent alors être constitués d'un embout de réservoir dans lequel est agencé un passage de tube de circulation de fluide.

Dans ce cas, il est intéressant que chaque embout de réservoir soit constitué de deux pattes symétriques, chaque patte possédant une face d'appui venant en contact avec la face d'appui de l'autre patte, et que chaque face d'appui présente un enfoncement de forme adaptée pour loger au moins partiellement un tube de circulation de fluide. Ainsi, l'embout de réservoir peut être replié sur le réservoir en coinçant son extrémité.

De préférence, chaque face d'appui d'un embout de réservoir présente une ouverture dans laquelle débouche ledit enfoncement.

Dans un mode réalisation avantageux, chaque patte d'un embout de tube forme avec l'une des pattes d'un embout de réservoir une pièce d'un seul bloc, ce qui permet de réaliser les embouts de tube et de réservoir d'une seule et même pièce.

Dans un autre mode de réalisation qui ne constitue pas l'invention telle que revendiquée, ledit élément d'échange thermique est constitué d'un réservoir comprenant de deux joues généralement symétriques présentant chacune une face d'appui venant en contact avec la face d'appui de l'autre plaque, et chaque face d'appui présentant un enfoncement apte à loger au moins en partie un tube de circulation de fluide caloporteur. Dans ce mode de réalisation, le réservoir est réalisé en deux parties s'assemblant en coinçant un tube.
Dans ce mode de réalisation, le réservoir peut être muni de moyens de fermeture constitués de deux coques symétriques présentant chacune une face d'appui agencée pour venir en contact avec la face d'appui de l'autre coque.

De préférence, chaque face d'appui d'une coque est alors munie d'un enfoncement de forme adaptée pour loger au moins en partie un embout de tube de circulation de fluide caloporteur.

Dans ce cas, chaque coque est avantageusement pourvue d'au moins une ouverture coïncidant avec une ouverture d'un embout de tube.

Préférentiellement, chaque joue forme avec une coque une pièce d'un seul bloc.

Dans un mode de réalisation, chaque tube de circulation de fluide est constitué de deux plaques embouties associées.

En option, les plaques embouties associées présentent extérieurement des zones évidées assurant la rétention du matériau de stockage thermique.

Les coques peuvent présenter un trou en communication avec un réservoir.

Dans un mode de réalisation de l'invention, ledit élément d'échange thermique est constitué de deux plaques de fermeture et d'au moins une première plaque intermédiaire intercalée, dans laquelle sont découpés au moins un profil de tube et au moins un profil de réservoir. Ainsi, l'élément d'échange thermique peut être composé aisément à partir de plaques, par exemple en tôle métallique, découpées.

De manière avantageuse, le profil de tube présente alors une allure générale de U. Dans ce cas, un seul collecteur est nécessaire, simplifiant la structure de l'échangeur de chaleur.

Une configuration intéressante prévoit que les branches du U s'étendent en formant des ondulations, et que les ondulations des branches soient complémentaires. Il est ainsi possible de réaliser un tube de longueur importante tout en restant dans l'encombrement défini par les dimensions de la plaque intermédiaire.

Dans un mode de réalisation particulier, le profil de chaque réservoir est complémentaire d'une partie au moins du profil d'un tube de manière à réduire la quantité de matière séparant les tubes des réservoir et par conséquent à améliorer l'échange de chaleur entre le matériau de stockage thermique et le fluide caloporteur.

Un profil de réservoir peut alors être découpé à chaque fois entre les branches du U et extérieurement à chaque branche du U de manière à optimiser le volume offert par la plaque intermédiaire.

Dans une réalisation préférentielle, ledit élément d'échange thermique est constitué en outre d'une seconde plaque intermédiaire intercalée, dans laquelle sont découpés au moins un profil de tube et un profil de réservoir. Un élément d'échange thermique comprend alors plusieurs réservoirs et plusieurs tubes de circulation de fluide.

Dans ce cas, une plaque intermédiaire de fermeture peut être prévue intercalée entre les première et seconde plaques intermédiaires.

La plaque intermédiaire de fermeture comprend alors de préférence au moins une série de trous mettant en communication au moins un profil de tube et/ou au moins un profil de réservoir de chacune des première et seconde plaques intermédiaires. On assure ainsi la communication entre les réservoirs et/ou les tubes.

Dans une configuration avantageuse, les plaques de fermeture présentent au moins un trou en communication avec un profil de tube, et ces plaques présentent en outre un trou supplémentaire en communication avec un réservoir. Ceci permet de prévoir l'alimentation d'un élément d'échange thermique en matériau de stockage et eh fluide caloporteur.

Dans un autre mode de réalisation de l'invention encore, l'élément d'échange thermique comprend au moins une joue en appui mutuel avec une plaque de distribution, et la joue présente au moins un premier enfoncement couvert par la plaque de distribution de manière à former un tube de circulation de fluide. On obtient ainsi un élément d'échange thermique essentiellement constitué de deux pièces.

La joue présente alors au moins un second enfoncement couvert par la plaque de distribution de manière à former un réservoir.

Dans une variante de réalisation, ledit élément d'échange thermique comprend deux joues en appui mutuel et une plaque de distribution intermédiaire intercalée entre les joues, et chaque joue présente au moins un premier enfoncement couvert par la plaque de distribution intermédiaire de manière à former un tube de circulation de fluide. Cette configuration permet de créer deux tubes de circulation de fluide essentiellement à partir de trois pièces.

Chaque joue présente alors un second enfoncement couvert par la plaque de distribution intermédiaire de manière à former un réservoir.

De préférence, la plaque de distribution intermédiaire présente au moins un trou coïncidant à la fois avec le premier enfoncement d'une joue et le premier enfoncement de l'autre joue. Ceci permet de répartir la distribution de fluide entre les deux tubes de circulation de fluide.

La plaque de distribution intermédiaire présente avantageusement au moins un trou coïncidant à la fois avec un second enfoncement d'une joue et un second enfoncement de l'autre joue. Ainsi, les réservoirs sont en communication, ce qui permet notamment de faciliter.le remplissage.

Le premier enfoncement peut présenter une allure générale de U pour assurer une circulation de fluide en U.

Dans ce cas, un second enfoncement central est avantageusement ménagé entre des branches dudit U. Ainsi, les échanges thermiques entre le tube et le réservoir central sont favorisés.

La plaque de distribution intermédiaire présente alors au moins un trou coïncidant avec le second enfoncement central d'une joue et au moins un second enfoncement de l'autre joue d'un même élément d'échange thermique. Cette configuration permet de faciliter le remplissage des réservoirs.

Dans un mode de réalisation particulier, chaque joue présente un second enfoncement central et la plaque de distribution intermédiaire présente au moins un trou coïncidant avec le second enfoncement central de chacune des joues d'un élément d'échange thermique pour faciliter le remplissage des réservoirs.

Le premier enfoncement s'étend avantageusement en formant des oscillations de manière à augmenter la longueur du tube pour un encombrement de la joue donné.

La surface d'une joue laissée libre par le premier enfoncement est sensiblement totalement couverte de seconds enfoncements afin d'optimiser la surface disponible sur une joue.

La joue présente de préférence au moins un orifice débouchant dans le premier enfoncement pour assurer l'arrivée d'un fluide dans l'enfoncement.

La joue présente avantageusement au moins un orifice débouchant dans un second enfoncement pour assurer l'arrivée de fluide dans l'enfoncement.

L'échangeur comprend avantageusement au moins un raccord interposé entre deux joues d'éléments d'échange thermique adjacents, ledit raccord présentant un orifice de forme adaptée à l'orifice desdites joues débouchant dans le premier enfoncement pour permettre une circulation de fluide d'un élément d'échange thermique à l'autre.

Ce raccord peut présenter en outre un orifice de forme adaptée à l'orifice débouchant dans le second enfoncement. Dans un mode de réalisation avantageux, chaque élément d'échange thermique comprend une pluralité de tubes de circulation de fluide caloporteur disposés et une pluralité de réservoirs de stockage thermique intercalés. Les tubes de circulation de fluide caloporteur sont alors de préférence disposés en quinconce et les tubes de circulation de fluide et les réservoirs de stockage thermique sont disposés de manière alternée.

Dans un mode de réalisation préférentiel, le fluide caloporteur est un fluide de type réfrigérant et que le matériau de stockage thermique est un matériau de stockage de frigories. Ainsi, l'échangeur de chaleur peut être utilisé dans un circuit de climatisation de véhicule automobile.

D'autres caractéristiques et avantages de l'invention apparaîtront à l'examen de la description détaillée ci-après, et des dessins annexés sur lesquels :
- la figure 1 est une vue schématique de face d'un échangeur de chaleur dans un premier mode de réalisation non couvert par les revendications pourvu d'éléments d'échange thermique,
- la figure 2 est une vue partielle en perspective d'un élément d'échange thermique de l'échangeur de chaleur de la figure 1 selon une première configuration,
- la figure 3 est une vue en coupe transversale de l'élément d'échange thermique de la figure 2,
- la figure 4A est une vue partielle en perspective d'une partie d'un élément d'échange thermique de l'échangeur de la figure 1 dans une deuxième configuration,
- la figure 4B est une vue en coupe transversale d'un élément d'échange thermique de l'échangeur de la figure dans une variante de réalisation,
- la figure 4C est une vue en coupe transversale d'un élément d'échange thermique de l'échangeur de la figure dans une variante de réalisation encore,
- la figure 4D est une vue en coupe transversale partielle de l'élément d'échange thermique de la figure 2 dans une variante de réalisation,
- la figure 5 est une vue en perspective d'un embout de réservoir dans une première configuration
- la figure 6 est une vue en perspective d'un embout de tube dans une première configuration,
- la figure 7 est une vue en perspective de l'embout de tube de la figure 6 et d'un tube,
- la figure 8 est une vue de face d'un embout de réservoir dans une seconde configuration et d'un embout de tube de la figure 7,
- la figure 9 est une vue partielle en perspective éclatée de l'élément d'échange thermique de la figure 8 dans une variante de réalisation,
- la figure 10 est une vue de profil de l'élément d'échange thermique de la figure 9,
- la figure 11A est une vue partielle, schématique et de profil de plusieurs éléments d'échange thermique de la figure 10,
- la figure 11B est une vue en perspective d'une pièce de la figure 11A seule,
- la figure 12 est une vue partielle en perfective éclatée d'un embout de tube et d'un embout de réservoirs combinés,
- la figure 13 est une vue en perspective éclatée d'un embout de tube et d'un embout de réservoirs combinés dans une autre variante de réalisation,
- la figure 14 est une vue en perspective partielle d'un embout de tube et d'un embout de réservoirs combinés dans une autre variante de réalisation encore,
- la figure 15 est une vue en perspective de plusieurs embouts de la figure 14 associés,
- la figure 16 est une vue en perspective éclatée d'un élément d'échange thermique dans un autre mode de réalisation non couvert par les revendications,
- la figure 17 est une vue partielle de profil de l'élément d'échange thermique de la figure 16,
- la figure 18 est une vue en perspective éclatée d'un élément d'échange thermique dans un mode de réalisation de l'invention,
- la figure 19 est une vue en perspective d'un échangeur de chaleur constitué à partir d'éléments d'échange thermique de la figure 18,
- la figure 20 est une vue en perspective éclatée d'un élément d'échange thermique dans un autre mode de réalisation encore de l'invention,
- la figue 21 est une vue en perspective d'une plaque intercalaire pour l'élément d'échange thermique de la figure 20,
- la figure 22 est une vue en perspective d'une joue pour l'élément d'échange thermique de la figure 20,
- la figure 23 est une vue en perspective partiellement éclatée d'un échangeur de chaleur constitué à partir d'éléments d'échange thermique de la figure 20,
- la figure 24 est une vue en perspective d'un raccord pour l'échangeur de chaleur de la figure 23, et
- la figure 25 est une coupe transversale schématique d'une portion d'un échangeur de chaleur selon l'invention.

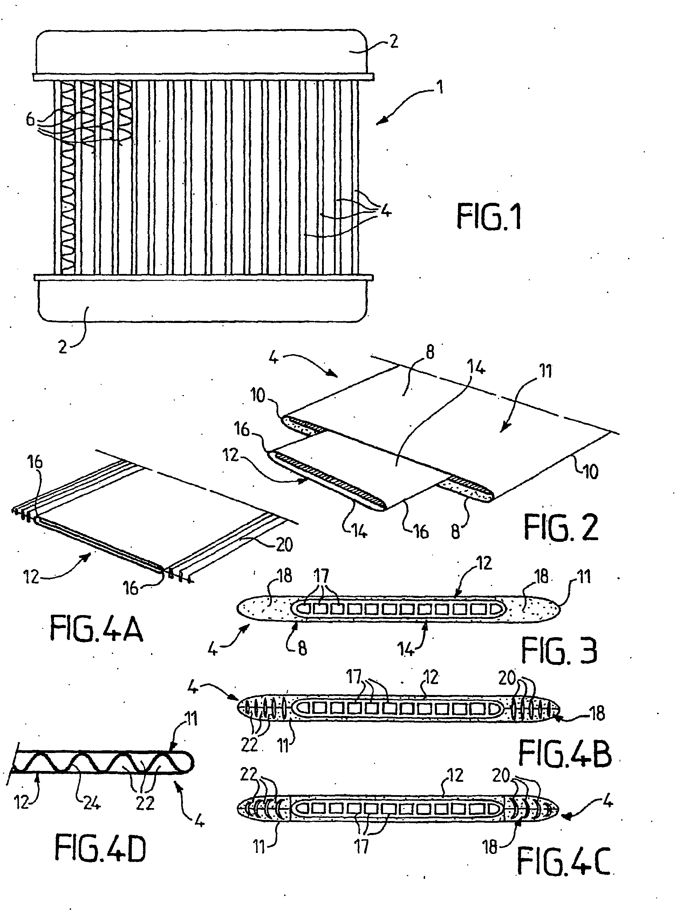

Les dessins annexés pourront non seulement servir à compléter l'invention, mais aussi contribuer à sa définition le cas échéant. Toutefois, les figures 1 à 17 ne constituent pas l'invention telle que revendiquée.

La figure 1 est une vue de face schématique d'un échangeur de chaleur.

L'échangeur de chaleur 1 est constitué de deux boîtes collectrices 2 de forme générale parallélépipédique disposées en vis-à-vis. Entre les boîtes collectrices 2 est disposée un faisceau d'éléments d'échange thermique 4 destinés à contenir un matériau de stockage thermique et un fluide caloporteur, et disposés alignés. Les éléments d'échange thermique 4 sont d'allure générale tubulaire, comme l'illustre la figure 2. Entre deux éléments d'échange thermique 4 adjacents, est disposé à chaque fois un intercalaire d'échange de chaleur 6. L'intercalaire d'échange de chaleur 6 a pour fonction d'augmenter la surface d'échange thermique entre un matériau de stockage thermique, un fluide caloporteur contenu dans les éléments d'échange thermique 4 et l'air qui traverse l'échangeur de chaleur 1.

La figure 2 est une vue partielle en perspective d'un élément d'échange thermique 4 de l'échangeur de chaleur 1 de la figure 1. L'élément d'échange thermique 4 est constitué d'un réservoir 11. Le réservoir 11 est de section oblongue et présente deux grandes faces latérales parallèles 8 sensiblement rectangulaires reliées entre elles par des portions de jonction 10 coudées. Le réservoir 11 peut être considéré comme étant un tube plat de grande dimension. Par le terme "tube plat", on entend un tube dont l'écartement entre les deux grandes faces est faible comparé à la largeur de ces grandes faces. Le réservoir 11 peut être de façon similaire réalisé en tant que tube plaque, tube plié, tube extrudé, tube roulé, ou tout autre forme connue.

L'élément d'échange thermique 4 est constitué en outre d'un tube de circulation de fluide 12 disposé dans l'espace intérieur du réservoir 11, dans une zone centrale. Dans cet exemple de réalisation, le tube 12 est de type tube plat. Le tube de circulation de fluide 12 présente, de manière analogue au réservoir tubulaire 4, deux grandes faces latérales 14 planes symétriques et sensiblement rectangulaires, reliées deux à deux par des portions de jonction coudées 16.

Le réservoir 11 et le tube 12 décrits ici sont de forme analogue et de type plat, mais d'autres configurations sont envisageables. Il est possible ainsi de prévoir un tube de circulation de fluide de section circulaire disposé à l'intérieur d'un réservoir de section ronde. Il est également possible de prévoir un tube de circulation de fluide de section ronde disposé à l'intérieur d'un réservoir de type plat.

En outre, différents types de tubes plats peuvent être disposés à l'intérieur du réservoir 4, en particulier des tubes plaques, pliés, extrudés, roulés, ou tout autre forme connue.

La figure 3 est une coupe transversale de l'élément d'échange thermique 4. Le tube 12 présente une pluralité de canaux longitudinaux 17 assurant la circulation d'un fluide caloporteur, qui ici est un fluide réfrigérant. Un tel tube 12 est parfois désigné "tube plat multi-canaux". D'autres types de tubes peuvent être utilisés ici, en particulier des tubes à un seul canal.

Le tube plat 12 est disposé dans une zone centrale du réservoir 11. Le tube plat 12 étant de plus petite dimension que le réservoir 11, deux volumes de stockage de matériau 18 longitudinaux sont ménagés de part et d'autre du tube plat 12 à l'intérieur du réservoir 11. Ces volumes de stockage 18 peuvent être remplis d'un matériau de stockage thermique, par exemple un matériau de stockage de frigories. Dans le cas où un fluide réfrigérant circule à l'intérieur des canaux longitudinaux 17, ce dernier refroidit en particulier le matériau de stockage de frigories contenu dans les volumes de stockage 18.

Les faces latérales 14 du tube plat 12 sont en contact sur toute leur surface avec les faces latérales 8 du réservoir 11. Ainsi, l'échange de chaleur entre le fluide caloporteur circulant à l'intérieur des canaux longitudinaux 17 du tube plat 12 et l'air frôlant les faces latérales 8 du réservoir 11 sont optimisés. Pour améliorer encore l'échange de chaleur, les intercalaires d'échange de chaleur 6 (non représentés sur la figure 3) sont en contact avec les faces latérales 8 du réservoir 11.

La figure 4A illustre une variante de réalisation du tube plat 12. Dans cette variante, le tube plat 12 présente, associée aux portions de jonction 16 coudées, une série d'éléments de cloisonnement 20 de forme généralement rectangulaire disposés de manière que leur longueur suive la longueur du tube plat 12 et que leur hauteur soit disposée perpendiculairement au grand axe de la section oblongue du tube plat 12. Cette hauteur est sensiblement égale à l'épaisseur du réservoir 11.

La figure 4B est une vue en coupe transversale du tube plat 12 de la figure 4A disposé à l'intérieur du réservoir 11 de la figure 2. Une fois ce tube plat 12 muni des éléments de cloisonnement 20 introduit à l'intérieur du réservoir 11, les volumes de stockage 18 sont cloisonnés et présentent une pluralité de compartiments longitudinaux 22 contenant du matériau de stockage thermique.

La figure 4C est une vue en coupe d'une variante de réalisation des éléments de cloisonnement 20 de la figure 4A. Dans cette variante, les éléments de cloisonnement 20 sont d'allure générale coudée de manière analogue aux portions de jonction 10 coudées du réservoir tubulaire 4.

Comme le montre la figure 4D, les volumes de stockage 18 peuvent être, en option, cloisonnés au moyen chacun d'un intercalaire 24 d'allure générale ondulée.

On note que dans l'élément d'échange thermique 4, le réservoir 11 et le tube 12 sont disposés intercalés, ou imbriqués, en sorte que, dans un plan médian de l'élément d'échange thermique 4 parallèle aux grandes faces 8 du réservoir 11, on obtient une section de tube 12 de circulation de fluide caloporteur encadrée par deux portions de réservoir de matériau de stockage thermique 11. Cette disposition permet d'obtenir un bon échange de chaleur entre le matériau de stockage et le fluide caloporteur.

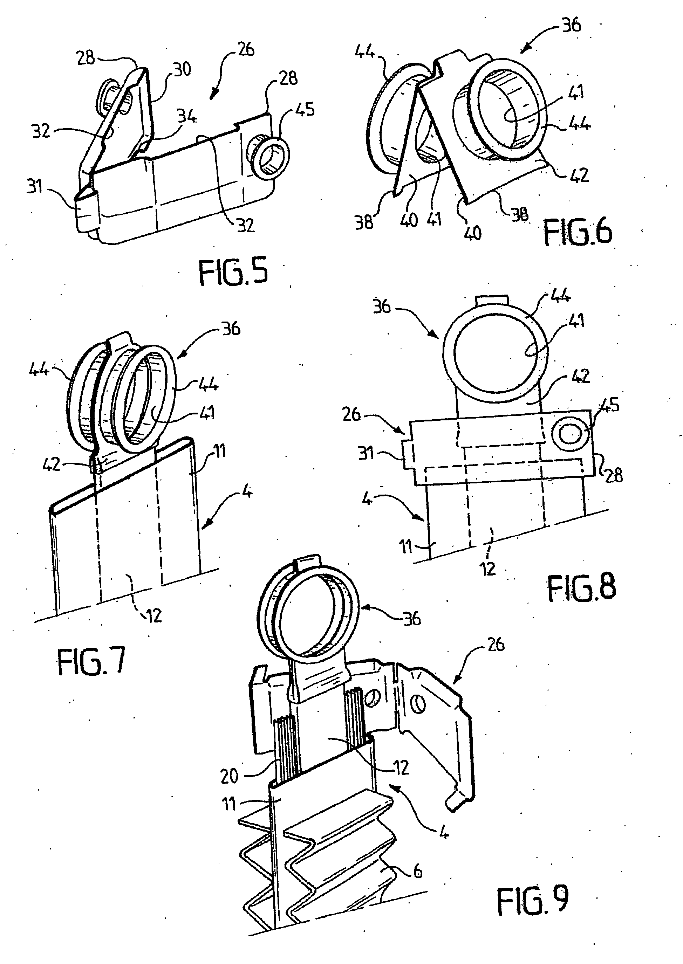

La figure 5 est une vue en perspective d'un embout de réservoir 26 comprenant deux pattes symétriques 28 munies chacune d'une face d'appui 30. Les pattes symétriques 28 sont liées entre elles par une boucle métallique 31, laquelle peut être pliée de sorte que les faces d'appui 30 viennent au contact l'une de l'autre. Chaque face d'appui 30 présente un premier enfoncement 32 dont la forme est prévue de manière à loger sensiblement la moitié de la section du tube plat 12. Chaque face d'appui 30 présente en outre un second enfoncement 34 de forme adaptée pour loger approximativement la moitié de la section du réservoir 11. Les premier 32 et second 34 enfoncements communiquent. En repliant les pattes symétriques 28 l'une contre l'autre, les seconds enfoncements 34 des faces d'appui 30 délimitent un premier logement dont la forme est adaptée pour recevoir l'une des extrémités du réservoir 11 et pour assurer le passage du tube plat 12.

Ainsi l'embout de réservoir 26 bouche l'extrémité du réservoir 11 tout en permettant le passage du tube plat 12, lequel dépasse de l'embout de réservoir 26. Les tubes.plats 12 dépassant des réservoirs 11, et plus précisément des embouts des réservoirs 26, ils peuvent être reçus dans les boîtes collectrices 2.

Dans un autre mode de réalisation d'un échangeur de chaleur, un embout de tube 36, lequel est illustré vu en perspective sur la figure 6, peut être prévu. L'embout de tube 36 est constitué de deux pattes symétriques 38 présentant chacune une face d'appui 40 et une face de jonction 42. Les faces d'appui 40 sont agencées pour venir en appui l'une contre l'autre et fermer ainsi l'embout de tube 36. Chacune des faces d'appui 40 présente un enfoncement non représenté capable de loger une partie de la section d'un tube plat 12. Ainsi, une fois fermé l'embout de tube 36 est capable de recevoir l'extrémité d'un tube plat 12. Chacune des faces d'appui 40 et de jonction 42 d'une même patte symétrique 38 est traversée par une même ouverture de passage de fluide 41 circulaire permettant le passage du fluide réfrigérant du tube plat 12 vers l'extérieur de l'embout de tube 36. Chacune des faces de jonction 42 est en outre munie d'un collet annulaire 44 faisant saillie de la face de jonction 42 et bordant l'ouverture de passage de fluide 41. Le collet annulaire 44 est agencé pour s'appuyer sur un collet annulaire 42 d'un embout de tube 12 adjacent. Dans ce mode de réalisation, on réalise un collecteur par empilement successifs d'embouts de tube 36, chaque collet annulaire 44 venant en appui sur un collet annulaire 44 d'un embout de tube 36 adj.acent.

La figure 7 illustre, vu en perspective, un tube plat de circulation de fluide 12 muni de l'embout 36 illustré à la figure 6 et disposé à l'intérieur d'un réservoir 11 pour former un élément d'échange thermique 4.

Dans un mode de réalisation particulier (non représenté), un échangeur de chaleur est réalisé en utilisant conjointement l'embout de réservoir 26 de la figure 5 pour boucher les réservoirs 11 et l'embout de tube 36 de la figure 6 pour former des collecteurs de fluide.

Dans une variante de réalisation, laquelle est illustrée sur la figure 8, la forme des premiers enfoncements 32 de l'embout de réservoir 26 est prévue non plus pour loger le tube plat 12 mais pour loger en partie l'une des pattes symétriques d'un embout de tube 36. Ainsi, la partie basse de l'embout de tube 36 est emprisonnée dans l'embout de réservoir 26, comme le montre la figure 8.

En option, il peut être prévu sur l'une des pattes symétriques 28 de l'embout de réservoir 26 une ouverture de passage de matériau de stockage thermique 45 qui communique avec l'un des seconds enfoncements 34. Cette ouverture peut servir au remplissage des volumes de stockage 18.

La figure 9 illustre une variante de réalisation comprenant un embout de réservoir 26 du type illustré sur la figure 8, un embout de tube 36 du type décrit précédemment et un tube 12 du type illustré sur la figure 4A.

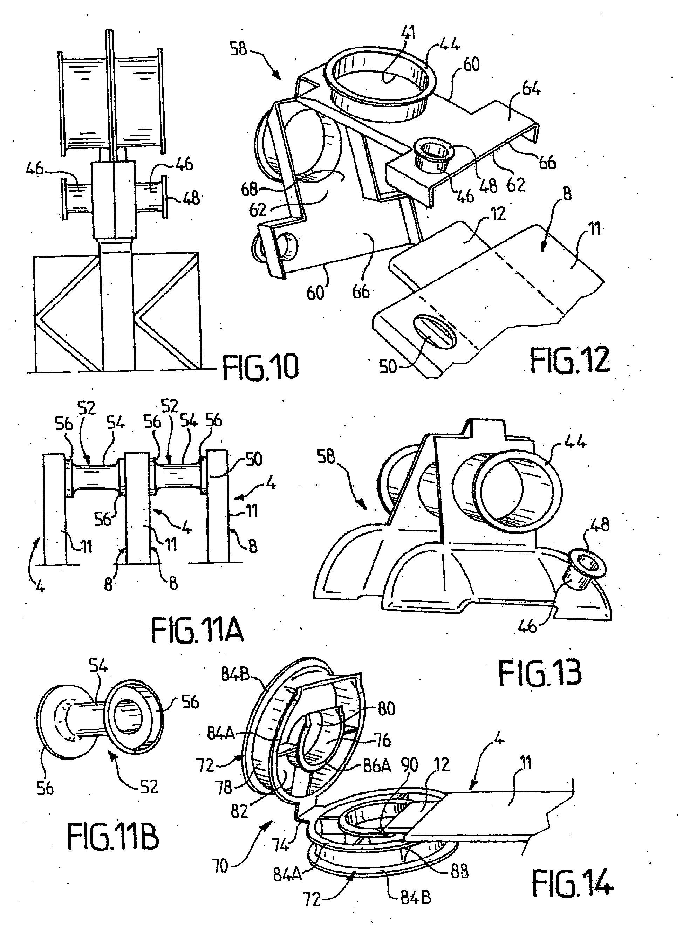

La figure 10 est une vue de profil de la variante de réalisation illustrée sur la figure 9. Il peut être prévu en option un organe de jonction 46 de forme tubulaire muni à son extrémité d'une collerette 48 faisant saillie d'une patte symétrique 28 de l'embout de réservoir 26 et entourant une ouverture de passage de matériau de stockage thermique. Une collerette 48 d'un organe de jonction 46 est agencée pour s'appuyer sur la collerette 48 d'un organe de jonction 46 d'un embout de réservoir 11 adjacent. L'empilement successif des organes de jonction 46 forme un conduit pour le passage du fluide stockage thermique qui alimente chacun des réservoirs 11 d'un échangeur de chaleur. Ainsi le remplissage des réservoirs 11, i.e. des volumes de stockage 18 est facilité.

Les figures 11A et 11B illustrent une variante de réalisation dans laquelle, une ouverture de passage de matériau de stockage thermique 50 est prévue sur chacune des faces latérales 8 des réservoirs 11. Dans un réservoir 11, l'une des ouvertures communique avec l'un des volumes de stockage 18, l'autre ouverture étant en communication avec l'autre volume de stockage 18. On prévoit alors un organe de jonction 52. Comme le montre en détail la figure 11B, l'organe de jonction 52 est prévu sous la forme d'un court segment de tube de section circulaire 54 dont chacune des extrémités se termine en forme de collet évasé 56. L'un des collets évasés 56 d'un organe de jonction 52 prend appui sur une face latérale 8 d'un réservoir 11 en entourant une ouverture de passage de matériau de stockage thermique 50 , l'autre collet évasé 56 prenant appui sur un autre réservoir tubulaire 4 de manière analogue. Les organes de jonction 52 permettent de créer un conduit d'alimentation des réservoirs 11 comme décrit précédemment.

La figure 12 illustre, vu en perspective, un embout combiné 58 assurant à la fois les fonctions d'un embout de tube 36 et d'un embout de réservoir 26. L'embout combiné 58 se présente sous la forme de deux pattes symétrique 60 présentant chacune une face d'appui. 62 et une face de jonction 64. Chaque patte symétrique 60 présente une partie embout de réservoir au niveau de laquelle la face d'appui 62 présente un premier enfoncement 66 apte à loger environ la moitié de la section du réservoir 11 au voisinage de son extrémité. Chacun des premiers enfoncements 66 se prolonge par un second enfoncement 68 apte à loger environ la moitié de la section du tube plat 12. Chacun des seconds enfoncements 68 débouche de manière radiale dans une ouverture de passage de fluide caloporteur 41 entourée d'un collet annulaire 44 du type décrit plus haut. Dans ce mode de réalisation, on note que le réservoir 11 est muni d'une ouverture circulaire de passage de matériau de stockage thermique 50 du type décrit plus haut et d'un organe de jonction 46 également décrit ci-dessus.

La figure 13 est une vue sous un autre angle de l'embout combiné 58 de la figure 12.

La figure 14 est une vue en perspective d'un embout combiné 70 en tant que variante de réalisation de l'embout combiné 58 de la figure 12. L'embout combiné 70 se présente sous la forme de deux branches symétriques 72 liées entre elles par une boucle de jonction 74 laquelle peut être repliée pour mettre en appui les branches 72 l'une contre l'autre. Chacune des branches symétriques 72 est d'allure générale cylindrique de section en forme de couronne comprenant une paroi intérieure 76 de forme cylindrique et une paroi extérieure 78 également de forme cylindrique. La paroi intérieure 76 délimite intérieurement un espace central 80. Extérieurement, la paroi intérieure délimite en combinaison avec la paroi extérieure 78 un espace intérieur 82 de section en couronne.

À chacune de ses extrémités, la paroi extérieure 78 s'élargit de manière à former à chaque fois un collet annulaire 84A et 84B. Une fois la boucle 74 repliée, l'un des collets annulaires, désigné collet annulaire d'appui 84A, d'une branche symétrique 72 vient en appui sur l'un des collets annulaires 84, i.e. le collet annulaire d'appui 84A de l'autre branche 72. Les collets annulaires 84 laissés libres seront appelés collets annulaires de jonction et notés 84B. La paroi intérieure 76 s'élargit à l'une et l'autre de ses extrémités de manière à former à chaque fois un collet annulaire appelé collet d'appui 86A ou collet de jonction 86B selon qu'il vient en contact avec un collet d'un même embout combiné 70 ou non. Une fois la boucle 74 repliée, les collets d'appui 86A et 84A des parois intérieures 76 et extérieures 78 viennent en appui sur les collets d'appui 86A et 84A des parois intérieures 76 et extérieures 78 de l'autre branche symétrique 82.

Chaque branche symétrique 82 présente du côté des collets d'appui 84A et 86A un premier enfoncement 88 de forme adaptée pour loger une partie de la section du réservoir 11 et un second enfoncement 90 de forme adaptée pour loger en partie la section du tube plat 12, les premier 88 et second 90 enfoncement communiquant entre eux. Le second enfoncement 90 débouche dans l'espace central 80 tandis que le premier enfoncement 88 débouche dans l'espace intérieur 82 de la branche symétrique 82.

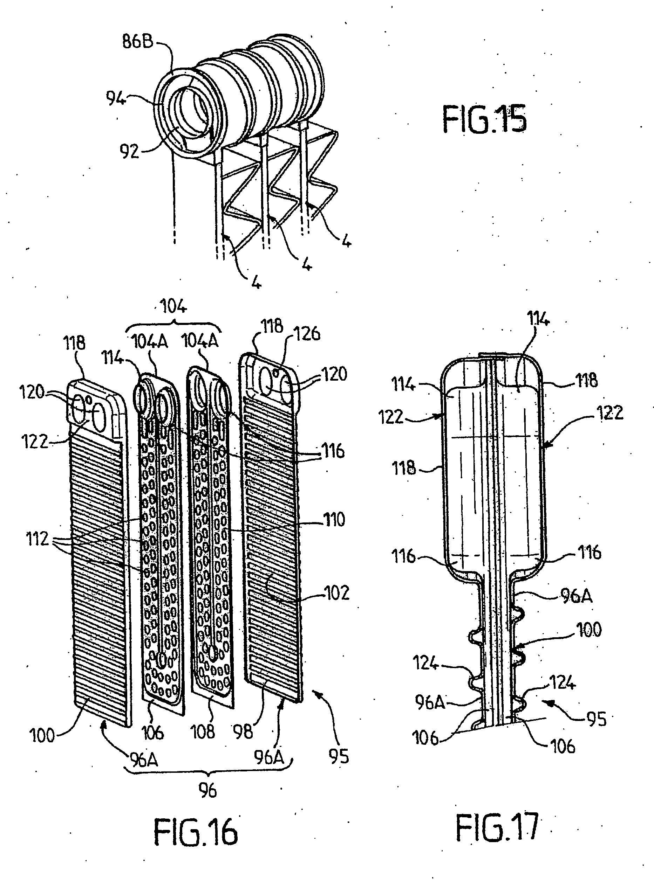

Par empilement successif d'embouts combinés 70 du type illustré sur la figure 15, se forment :
- par association des espaces centraux 80, un conduit de circulation 92 de fluide réfrigérant faisant fonction de collecteur,
- par association des espaces intérieurs 82 mis en communication, un conduit d'alimentation 94 en matériau de stockage thermique.

Cette configuration de l'embout combiné 70 offre l'avantage d'un encombrement réduit tout en assurant une alimentation simple de chacun des volumes de stockage des réservoirs 11.

La figure 16 est une vue en perspective éclatée d'un élément d'échange thermique 95 dans un autre mode de réalisation. L'élément d'échange thermique 95 est constitué d'un réservoir 96 et d'un tube de circulation de fluide 98.

Le réservoir 96 de la figure 16 est constitué de deux plaques embouties 96A, ou joues, conformées dans une tôle métallique et présentant chacune une face d'appui 98 et une face extérieure 100. Les faces d'appui 98 sont agencées de sorte que la face d'appui 98 d'une plaque emboutie 96A puisse venir en appui contre la face d'appui 98 de l'autre plaque emboutie 96A. Chaque face d'appui 98 est en outre pourvue d'un enfoncement 102 dont la forme est prévue pour loger sensiblement la moitié de la section d'un tube de circulation de fluide, et une grande partie de la longueur de celui-ci.

Dans un mode de réalisation particulier, illustré par la figure 16, le tube de circulation de fluide caloporteur 104 est un tube en deux parties constitué de deux plaques embouties 104A présentant chacune une face extérieure 106 et une face d'appui 108. La face d'appui 108 de chacune des plaques embouties 104A est agencée de sorte qu'elle puisse venir en appui contre la face d'appui 108 de l'autre plaque emboutie 104A. Les faces d'appui 108 sont munies d'un enfoncement 110 en forme de U et réalisant ainsi un tube en forme général de U par association des deux plaques embouties 104A. Sur la face extérieure 106 des plaques embouties 104A sont prévus des évidements 112 aptes à retenir, une fois le tube 104 logé entre les deux plaques embouties 102, le matériau de stockage thermique. Aux extrémités libres des branches du U de chacune des plaques embouties 104A, est prévu un demi-embout de tube 114 conformé dans la même plaque de tôle métallique à l'origine de la plaque emboutie 104A. Le demi-embout de tube 114 présente du côté de la face extérieure 106 deux collets annulaires 116.

Dans une variante de réalisation non représentée de l'élément d'échange thermique 95 de la figure 16, la face d'appui 98 de chaque plaque emboutie 96A vient en appui sur la face extérieure 106 d'une plaque emboutie 104A et les faces d'appui 108 des plaques embouties 104A viennent en appui l'une contre l'autre.

À l'une des extrémités de chacune des plaques embouties 96A, est prévue une coque 118 d'allure générale parallélipédique, sous la forme d'un enfoncement de la face d'appui 102 de la plaque emboutie 96A. Deux coques 118 associées forment l'embout du réservoir 96. Deux trous circulaires 120 sont prévus dans chacune des coques 118, lesquels correspondent aux ouvertures délimitées par les collets annulaires 116 des plaques embouties 104A. Une fois les deux plaques embouties 104A associées et logées entre les deux plaques embouties 96A jointes, on est en présence d'un réservoir 96 à l'intérieur duquel est logé un tube de circulation de fluide 104. Chacune des coques 118 présente une face d'appui 122 située du même côté de la plaque emboutie 96A que la face extérieure 100 et qui peut venir en appui avec la face d'appui 122 d'une coque 118 adjacente dans l'échangeur de chaleur.

Ainsi associées par empilement successif des faces d'appui 122, les coques 118 en combinaison avec les collets annulaires 116 forment deux conduits de circulation de fluide tubulaires d'axe perpendiculaire à l'axe des tubes en U. À l'intérieur de ces conduits, peut circuler le fluide réfrigérant.

Comme le montre la figure 17, les plaques embouties 96A sont pourvues au niveau de l'enfoncement de leur face d'appui 98 d'enfoncements supplémentaires 124 régulièrement répartis sur la hauteur de chacune des plaques embouties 96A et courant sur la totalité de la largeur de la plaque emboutie 96A. Ces enfoncements 124 permettent de mettre en communication les évidements de rétention 112 des tubes de circulation de fluide en U. De manière optionnelle, la face d'appui 122 des coques 118 peut présenter un passage 126, circulaire dans cet exemple de réalisation, permettant d'alimenter l'intérieur du réservoir 96 en matériau de stockage thermique.

On note que dans l'élément d'échange thermique 95, le tube 94 et le réservoir 96 sont disposés intercalés, ou imbriqués, en sorte que, dans un plan parallèle aux plaques embouties 96A, la portion de tube de circulation de fluide est encadrée par deux portions de réservoir de matériau de stockage thermiques.

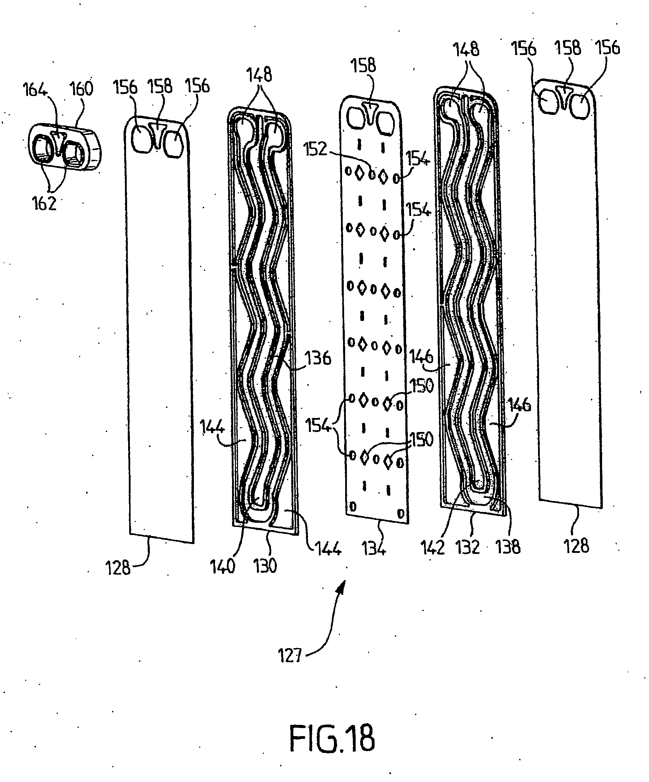

La figure 18 est une vue en perspective éclatée d'un élément d'échange thermique 127 dans un mode de réalisation de l'invention. L'élément d'échange thermique est constitué de deux plaques de fermeture 128 généralement rectangulaires, entre lesquelles sont intercalées une première plaque intermédiaire 130 et une seconde plaque intermédiaire 132, toutes deux d'allure généralement rectangulaire et sensiblement identique aux plaques de fermeture 128. Entre les première 130 et seconde 132 plaques intermédiaires, est intercalée une plaque intermédiaire de fermeture 134 d'allure générale rectangulaire et sensiblement identique aux allures des plaques de fermeture 128 et intermédiaire 130 et 132.

Dans les première 130 et seconde 132 plaques intermédiaires sont découpés les profils d'un premier 136 et d'un second 138 tube de circulation de fluide caloporteur. Les premier 136 et second 138 profils sont de forme analogue et présentent une allure générale en U. Chacune des branches du U présente une série d'ondulations telle que les oscillations d'une branche soient complémentaires aux oscillations de la branche du U en vis-à-vis. Entre les branches du U du premier 136 et du second 138 profil de tube, sont découpés respectivement un profil de premier réservoir central 140 ainsi qu'un profil de second réservoir central 142. L'allure des profils des premier 140 et second 142 réservoirs centraux est complémentaire de l'allure de chacune des branches du U. Extérieurement aux branches des U de chacune des plaques intermédiaires 130 et 132 sont ménagés respectivement des premiers 144 et seconds 146 réservoirs latéraux. La forme des premiers 144 et seconds 146 réservoirs latéraux est pour partie complémentaire d'une branche du U et pour le reste d'un bord de la plaque intermédiaire 136 ou 138. Aux extrémités libres des branches des U, les profils des premier 136 et second 138 tubes s'élargissent de manière à former à chaque fois une extrémité sensiblement ovoïde 148. La plaque intermédiaire de fermeture 134 présente une série de premiers perçages 150 répartis selon une disposition en U. Cette disposition en U suit l'allure générale des premier 140 et second 142 tubes.

Une fois les première 130 et seconde 132 plaques intermédiaires apposées de part et d'autre de la plaque intermédiaire de fermeture 134, les premier 140 et second 142 profils de tubes de circulation de fluide sont mis en communication par l'intermédiaire des premiers trous 150. Ainsi la répartition régulière des premiers trous 150 assure une bonne communication de fluide entre les premier 140 et second 142 tubes. Dans un mode de réalisation particulier les premiers trous 150 sont en forme de losange.

En outre, la plaque intermédiaire de fermeture 134 présente une série de second trous 152 disposés alignés selon la hauteur médiane de la plaque intermédiaire de fermeture 134 et qui permettent de mettre en communication les premier 140 et second 142 réservoirs centraux. La plaque de fermeture intermédiaire 134 présente enfin une série de troisièmes trous 154 latéraux disposés alignés selon la hauteur de la plaque intermédiaire de fermeture 134 et permettant de mettre en communication les premier 144 et second 146 réservoirs latéraux.

Les plaques de fermeture 128 et la plaque intermédiaire de fermeture 134 présentent dans leur partie supérieure chacune deux orifices 156 ovoïdes correspondant au profil ovoïde des extrémités 148 libres des U des tubes de circulation de fluide.

En outre, les plaques de fermeture 128 et 134 présentent un orifice supplémentaire 158 d'allure sensiblement triangulaire et qui se superpose à la fois à une partie des premier 140 et second 142 réservoirs centraux et à une partie des premiers 144 et seconds 146 réservoirs latéraux. Ainsi, cet orifice supplémentaire 158 permet le remplissage des réservoirs en matériaux de stockage.

Lorsque les plaques de fermeture 128, la plaque intermédiaire de fermeture 134 et les première 130 et seconde 132 plaques intermédiaires sont assemblées, l'élément d'échange thermique 127 comprend un premier 136 et un second 138 tube de circulation de fluide d'allure générale en U et en communication entre eux. L'élément d'échange thermique 127 comprend en outre six réservoirs de matériau de stockage thermique également en communication entre eux.

Dans l'élément d'échange thermique 127, les tubes 136 et 138 et les réservoirs sont disposés intercalés, ou imbriqués. En effet, selon un plan parallèle aux plaques de fermeture par exemple, on trouve à chaque fois entre deux réservoirs un canal de circulation de fluide.

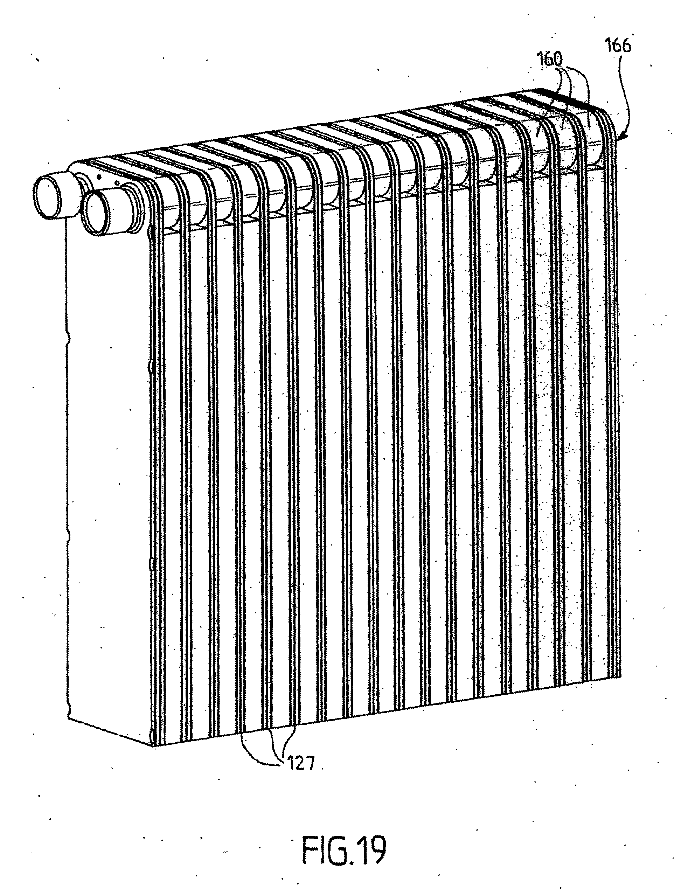

La figure 19 est une vue en perspective d'un échangeur de chaleur constitué à partir d'éléments d'échange thermique de la figure 18. Dans cet échangeur de chaleur, il est prévu une pluralité d'éléments d'échange thermique 127 alignés en faisceau et mis en communication les uns avec les autres par l'intermédiaire d'entretoises 160. Une entretoise 160 est également illustrée sur la figure 18. L'entretoise 160 se présente sous la forme d'une pièce parallélipédique dans laquelle sont ménagés deux trous distincts 162 correspondant aux trous 156 prévus dans les plaques de fermeture 128 ainsi qu'un troisième trou distinct 164 correspondant aux trous supplémentaires 158 prévus dans les plaques de fermeture 128. L'empilement de ces entretoises 160 permet de créer un collecteur 166.

Il a été illustré sur la figure 18, un élément d'échange thermique 127 dont les ondulations des.profils des premier 136 et second 138 tubes de circulation de fluide sont en opposition de phase (i.e: une ondulation du profil du premier tube 136 orientée vers le bord le plus proche de la première plaque intermédiaire 130 est en vis-à-vis d'une ondulation du profil du second tube 138 orientée vers le bord le plus éloigné de la seconde plaque intermédiaire 132). Il peut être envisagé de prévoir les ondulations des profils des premier 136 et second 138 tubes de circulation de fluide en phase. Dans ce cas, la plaque intermédiaire de fermeture 134 peut être omise, et les première 130 et seconde 132 plaques intermédiaires associées, par exemple par brasage.
Les première 130 et seconde 132 plaques intermédiaires représentées sur la figure 18 sont identiques et ont été disposées en opposition. Elles peuvent être identiques et disposées de manière symétrique. Alors, la plaque intermédiaire de fermeture 134 peut être omise comme décrit au paragraphe précédent.

Les profils des premier 136 et second 138 tubes peuvent également différer l'un de l'autre. Dans ce cas, les portions de ces profils qui se superposent sont avantageusement mises en communication par au moins un trou prévu à chaque fois dans la plaque de fermeture intermédiaire 134 en regard de ces portions. La plaque de fermeture intermédiaire 134 a ainsi un rôle de distribution de fluide entre lés premier 136 et second 138 tubes.

Les trous prévus dans la plaque de fermeture intermédiaire 134 ont été décrits comme étant en forme de losange pour les premiers trous 150 et de forme circulaire pour les seconds 152 et troisièmes 154. Des formes différentes peuvent être utilisées pour ces trous.

Dans d'autres modes de réalisation l'élément d'échange thermique 127, la première plaque intermédiaire 130 ainsi que la seconde plaque intermédiaire 132 peuvent être réalisées par emboutissage. Dans ce cas, les profils des premier 136 et second 138 tubes sont conformés par emboutissage dans une plaque de tôle métallique. Ils présentent alors chacun un fond. Dès lors, les plaques de fermeture 128 peuvent être omises.

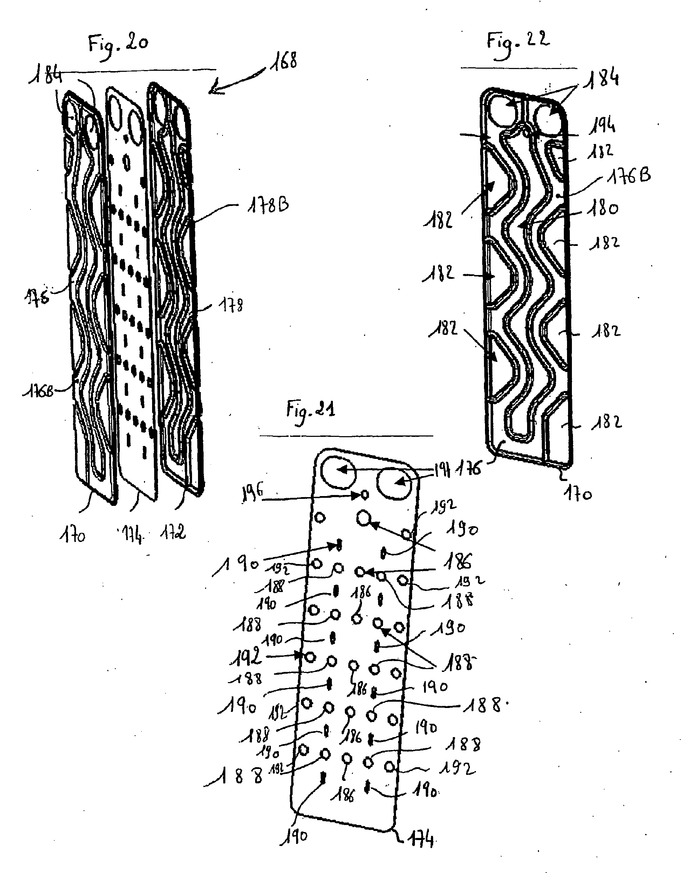

Les figures 20 à 24 illustrent un autre mode de réalisation de l'invention. Ici, un élément d'échange thermique 168 (figure 20) est constitué de deux joues 170 et 172 entre lesquelles est disposée une plaque intermédiaire de distribution 174.

La joue 170 est réalisée à partir d'une plaque de tôle métallique généralement rectangulaire. Dans cette plaque, un premier enfoncement, formé par emboutissage, 176 est réalisé. L'enfoncement 176 est couvert par la plaque de distribution 174 pour délimiter un tube de circulation de fluide 176B. Ici, l'enfoncement 176 court sur la quasi-totalité de la longueur de la joue 170 de manière à offrir une grande surface d'échange de chaleur.

Dans ce mode de réalisation, l'enfoncement 176 présente une allure générale en U, les branches dudit U étant disposées dans la longueur de la joue 170.

En particulier, chacune des branches de ce U présente une série d'ondulations telles que les oscillations d'une branche sont complémentaires des oscillations de la branche du U en vis-à-vis. Alternativement, les sommets de ces oscillations sont disposés à proximité du bord de la joue 170. Ce mode de réalisation particulier de l'enfoncement 176 permet d'optimiser la longueur de la circulation du fluide par rapport aux dimensions de la joue 170.

La joue 172 est analogue à la joue 170. En particulier, la joue 172 présente un premier enfoncement 178, lui aussi formé par emboutissage, couvert par la plaque de distribution 174 pour former un tube de circulation de fluide 178B comportant des canaux aller et retour de fluide.

Dans ce mode de réalisation, les oscillations des enfoncements 176 et 178 sont disposées en opposition de phase une fois les joues 170 et 172 assemblées.

Cette configuration permet de réaliser les joues 170 et 172 comme des pièces identiques en sorte que les coûts d'outillage et de fabrication de l'élément d'échange thermique 168 sont réduits.

La joue 170 présente une pluralité de seconds enfoncements ménagés de manière à couvrir sensiblement la totalité de la surface de la joue 170 laissée libre par l'enfoncement 176.

Comme le montre plus particulièrement la figure 22, la joue 170 présente ainsi un enfoncement central 180 ménagé entre les branches du U de l'enfoncement 176. Le contour de l'enfoncement central 180 suit le contour intérieur des branches dudit U en sorte que l'enfoncement central présente lui aussi une série d'ondulations.

Des seconds enfoncements extérieurs 182 sont réalisés dans la joue 170. Les seconds enfoncements extérieurs 182 sont essentiellement délimités par les bords de la joue 170 et les branches du U de l'enfoncement 176. Le contour des enfoncements 182 suit le contour des oscillations de l'enfoncement 176 et celui du bord de la joue 170. Plus particulièrement, un enfoncement 182 est à chaque fois délimité par une oscillation de l'enfoncement 176 et au moins un bord de la joue 170.

Les seconds enfoncements 180 et 182 sont couverts par la plaque de distribution 174 et forment ainsi des cavités aptes à stocker un fluide. Les seconds enfoncements 180 et 182 forment ainsi des réservoirs de stockage de fluide.

Aux extrémités de l'enfoncement 176 sont prévus des orifices d'arrivée et d'évacuation de fluide 184. En particulier, les orifices 184 sont disposés en des coins de la joue 170 opposés par la largeur de cette joue 170.

On comprend que la joue 172 comprend à son tour des seconds enfoncements homologues des enfoncements 180 et 182 de la joue 170.

La plaque de distribution 174 est réalisée à partir d'une plaque rectangulaire d'allure générale analogue à celle des joues 170 et 172.

La plaque de distribution 174 est percée d'une série de premiers trous 186 répartis sur les zones de la plaque de distribution 174 coïncidant à la fois avec le second enfoncement central 180 de la joue 170 et celui de la joue 172.

Ici, les oscillations des enfoncements centraux 180 des joues 170 et 172 sont en opposition de phase de sorte que la série de premiers trous 186 est disposée sensiblement alignée selon la longueur de la plaque de distribution 174. En particulier, la série de premiers trous est disposée selon le grand axe médian de la plaque 174.

La plaque de distribution 174 est en outre percée d'une pluralité de seconds trous 188 répartis sur des zones de cette plaque 174 coïncidant à la fois avec le premier enfoncement 176 de la joue 170 et le premier enfoncement 178 de la joue 172. Ici, les oscillations des premiers enfoncement 176 et 178 des joues 170 et 172 sont disposées en opposition de phase en sorte que les seconds trous 188 sont organisés en deux séries de trous alignés selon la longueur de la plaque 174 . Les oscillations d'une branche du U d'un premier enfoncement 176 ou 178 sont en phase avec les oscillations de l'autre branche de ce même enfoncement 176 ou 178 en sorte que les deux séries de trous sont disposées en regard l'un de l'autre selon la largeur de la plaque 174.

Les seconds trous 188 assurent une communication de fluide entre les tubes formés par le premier enfoncement 176 et le premier enfoncement 178. Ces trous sont optionnels. Ils peuvent être utilisés pour régler la distribution.de fluide entre les tubes précités.

La plaque de distribution 174 est en outre percée d'une pluralité de troisièmes trous 190 ménagés sur des zones de la plaque de distribution 174 coïncidant à la fois avec un second enfoncement latéral 182 de la joue 170 et l'enfoncement central 180 de la joue 172. De la même manière, ces troisièmes trous 190 sont ménagés sur des zones de la plaque de distribution 174 coïncidant à la fois avec un second enfoncement latéral 182 de la joue 172 et l'enfoncement central 180 de la joue 170.

Ici, les troisièmes trous 190 sont organisés selon deux séries de trous alignés selon la longueur de la plaque 174 et disposées en regard selon la largeur de cette plaque 174. En particulier, un trou 190 est à chaque fois disposé entre deux trous 188 et aligné avec ces derniers, à l'exception des trous disposés aux extrémités des séries.

Les troisièmes trous 190 permettent une communication de fluide entre le réservoir formé par l'enfoncement central 180 de la joue 170 (respectivement 172) et les réservoirs formés par les enfoncements extérieurs 182 de la joue 172 (respectivement 170). Ceci permet notamment de prévoir le remplissage des enfoncements extérieurs 182 par les enfoncements centraux 180.

La plaque de distribution 174 est enfin percée d'une pluralité de quatrièmes trous 192 ménagés sur des zones de la plaque de distribution 174 coïncident à la fois avec les enfoncements latéraux 182 de la joue 170 et les enfoncements latéraux 182 de la joue 172.

Dans ce mode de réalisation, les quatrièmes trous 192 sont organisés selon deux séries de trous 192 alignés selon la longueur de la plaque de distribution 174 et disposées en regard l'une de l'autre suivant la largeur de la plaque 174. Ici, les séries de trous 192 sont disposées à chaque fois à proximité d'un long bord de la plaque 174.

Les trous 190 sont ici de forme oblongue tandis que les autres trous présentent une forme circulaire. D'autres configurations sont bien entendu envisageables. En particulier, les trous d'une série peuvent être de forme différente des trous d'une, autre série. Les trous d'une même série pourraient également être de formes différentes.

Comme le montre la figure 22, chaque joue 170 et 172 présente un orifice 194 ménagé au niveau de son enfoncement central 180 et disposé selon l'axe médian longitudinal de cette joue. L'orifice 194 de la joue 170 coïncide ainsi avec l'orifice 194 de la joue 172. Un orifice 194 sert au remplissage du réservoir formé par un enfoncement central 180, les réservoirs formés par les enfoncements extérieurs 182 étant remplis par l'intermédiaire des trous 190.

Un trou 196 est ménagé sur la plaque 174 en regard des orifices 194. Les trous 194 permettent une entrée et une sortie d'un fluide à stocker dans les enfoncements centraux 180 et les enfoncements latéraux 182.

La plaque de distribution 174 présente également deux orifices 197 en regard des orifices d'arrivée et d'évacuation de fluide 184, et de forme analogue. Les orifices 197 mettent en communication de fluide les tubes 176B et 178B.

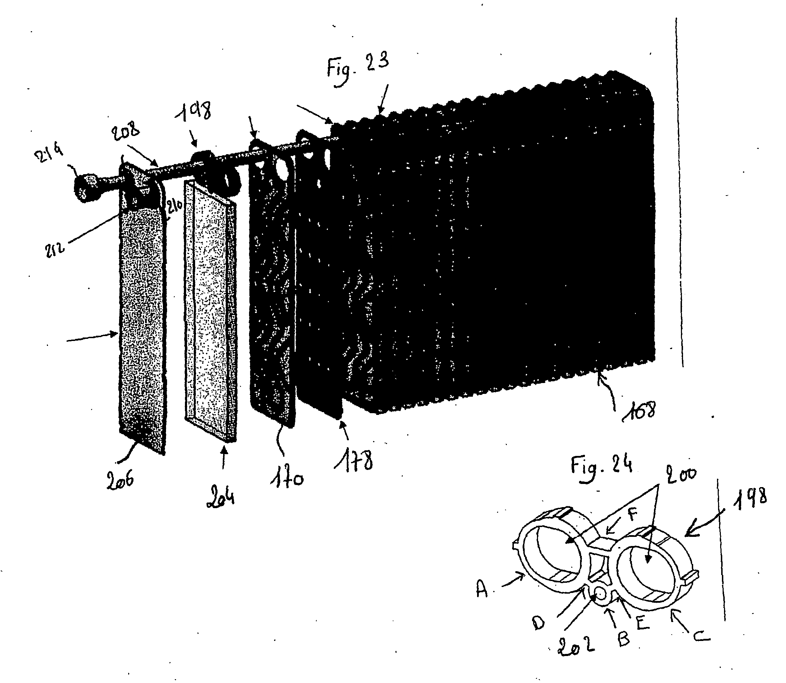

La figure 23 montre un échangeur de chaleur réalisé par empilement successif d'éléments d'échange thermique 168. Entre deux éléments 168 est agencé un raccord 198 pour mettre en communication les orifices 184 de deux éléments 168 successifs ainsi que les orifices 194.

Dans le mode de réalisation de la figure 24, le raccord 198 se présente sous la forme d'une pièce monobloc épaisse percée de deux orifices 200 de forme analogue aux,orifices 184 et disposés selon un agencement identique. Le raccord 198 présente en outre un passage 202 de section sensiblement identique à la forme du trou 194. Le raccord 198 comporte trois bagues A, B et C raccordées entre elles par trois branches D, E et F.

Le raccord 198 est de préférence réalisé par extrusion mais pourrait également être obtenu par moulage et/ou usinage.

De par leur épaisseur, les raccords 198 présentent également une fonction d'entretoisement entre deux éléments 168 successifs. L'espace libre que ces derniers ménagent entre deux éléments 168 peut être traversé par un fluide circulant extérieurement à l'échangeur de chaleur. Dans cet espace libre peut être logé un intercalaire d'échange de chaleur 204 en contact avec les joues 170 et 172 d'éléments 168 successifs et destiné à augmenter la surface d'échange de chaleur entre les fluides en circulation intérieurement et extérieurement dans l'échangeur de chaleur.

Aux extrémités de l'empilement, l'échangeur est fermé par des flasques 206 réalisées sous forme de plaques de tôle métallique rectangulaires. L'une des flasques 206 au moins comprend une entrée de fluide 208 et une sortie de fluide 210. Ici, l'entrée de fluide 210 comprend une tubulure de jonction destinée à être reliée au reste d'un circuit de circulation de fluide. Un tube d'insertion 214 traverse l'orifice 208 et débouche dans un collecteur formé par l'empilement des éléments 168 et des raccords 198. Le tube 214 assure l'alimentation en fluide et peut être connecté au reste d'un circuit de circulation de fluide.

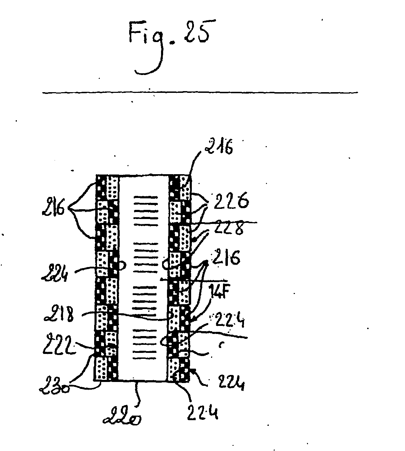

La figure 25 est une coupe transversale d'un échangeur de chaleur selon un mode de réalisation de l'invention. La figure 25 est schématique et est destinée à faire comprendre le principe dudit mode de réalisation.

Dans ce mode de-réalisation, le faisceau de l'échangeur de chaleur 1 comprend une pluralité de rangées de tubes plats 216. Une première face de contact 218 d'un intercalaire 220 est en contact avec un tube plat 216 d'une rangée de tubes sur deux. De même, une seconde face de contact 222 est en contact avec un tube plat 216 d'une rangée de tubes sur deux. Chaque tube 216 présente deux grandes faces latérales 224. Sur la première face de contact 218 de l'intercalaire 220 sont alternativement disposés un réservoir de fluide 226 puis un tube plat 216 d'une rangée de tubes. Chaque réservoir 226 présente deux grandes faces latérales 228 et deux petites faces latérales 230. Pour chacun des réservoirs en contact avec la première face de contact 218, l'une: des grandes faces 228 est en contact sur toute son étendue avec la première face de contact 218 tandis que l'autre est en contact sur toute son étendue avec une grande face latérale 224 d'un tube plat 216 dont l'autre grande face 224 est en contact sur toute son étendue avec la seconde face de contact 222 d'un intercalaire 220 adjacent non représenté. Réciproquement, pour chacun des tubes plats 216 en contact avec la première face de contact 218, l'une des grandes faces 224 est en contact sur toute son étendue avec la première face de contact 218 tandis que l'autre est en contact sur toute son étendue avec une grande face latérale 228 d'un réservoir 226 dont l'autre grande face 228 est en contact sur toute son étendue avec la seconde face de contact 222 d'un intercalaire 220 adjacent non représenté.

On comprend que dans cette configuration, les échanges thermiques entre les tubes 216 et les réservoirs 226 sont optimisés grâce au contact des différentes faces les unes contre les autres sur sensiblement toute leur étendue.

La figure 25 peut être vue comme une coupe transversale schématisée des échangeurs de chaleur des figures 19 et 23, en considérant que cette figure 25 illustre schématiquement le principe des éléments d'échange thermique 127 et 168 des figures 18 et 20, respectivement. Par exemple, l'élément d'échange thermique 168 peut être vu, en coupe transversale, comme comprenant quatre tubes plat 216 en U et des réservoirs 226, les canaux aller et retour desdits tubes et lesdits réservoirs étant alternés et disposés en quinconce selon plusieurs rangées.

D'autres modes de réalisation peuvent être envisagés à partir des exemples décrits ci-dessus.

Les tubes ont pour fonction de créer des canaux de circulation de fluide. Les tubes peuvent ainsi être de type plaques, pliés, extrudés, tubes plats, ou toute autre réalisation connue.

Les réservoirs ont pour fonction de créer des canaux adaptés à la réception de matériau de stockage thermique. Ces réservoirs peuvent être du type réservoir plaque, réservoir tube plié, réservoir extrudé, réservoir capsule, ou toute autre réalisation connue.

Différents types de tube peuvent être combinés avec des réservoirs de différents types.

Le fluide caloporteur peut être un fluide à stockage de calories ou de frigories, c'est-à-dire un fluide réfrigérant, par exemple du CO2.

Le matériau de stockage thermique peut être un matériau de stockage de froid ou un matériau de stockage de chaleur. En outre, il peut prendre la forme d'un matériau solide (par exemple sous forme de sel), liquide, à changement de phase, ou encore être du type liquide réfrigérant.

Les réservoirs peuvent être mis en oeuvre dans un dispositif dit à stockage passif, c'est-à-dire dans lequel il n'y a pas de circulation du matériau de stockage thermique à l'intérieur des réservoirs, ou encore dans un dispositif dit à stockage actif, c'est-à-dire un dispositif dans lequel une circulation du matériau de stockage est assurée à l'intérieur des réservoirs au moyen d'une boucle ou circuit de matériau de stockage thermique mis en mouvement à l'aide d'une pompe.

Enfin, il a été décrit, en particulier sur la figure 1, un échangeur de chaleur muni de deux boîtes collectrices 2. Il peut être envisagé un échangeur de chaleur muni d'une unique boîte collectrice associée à des tubes de circulation de fluide dits en U.

Dans les modes de réalisation illustrés par les figures 16 et 17 d'une part, 18 et 19 d'autre part et 20 à 24 enfin, la circulation du fluide caloporteur se fait selon un trajet en U. Toutefois, il est possible de réaliser une circulation en I, par exemple en dissociant les deux branches du U de manière à former deux tubes de circulation de fluide ou encore en les associant en un unique tube en I.

L'invention ne se limite pas aux modes de réalisation décrits ci-dessus seulement à titre d'exemple, mais englobe toutes les variantes que pourra envisager l'homme de l'art dans le cadre des revendications ci-après.

## Revendications

1. Échangeur de chaleur comprenant une pluralité de tubes (136,138) de circulation de fluide caloporteur, les extrémités desdits tubes (136,138) débouchant dans des collecteurs (148,160,166), des réservoirs (140,142,144,146) de matériau de stockage thermique en contact avec les tubes (136,138) de manière que le matériau de stockage et le fluide caloporteur échangent de la chaleur entre eux, et
une pluralité d'éléments d'échange thermique (127) logeant chacun au moins un réservoir (140,142,144,146) et au moins un tube (136,138), intercalés,
**caractérisé en ce que**
ledit élément d'échange thermique (127) étant constitué de deux plaques de fermeture (128) et d'au moins une première plaque intermédiaire (130,132) intercalée, dans laquelle sont découpés au moins un profil de tube (136,138) et au moins un profil de réservoir (140,142,144,146).

2. Échangeur de chaleur selon la revendication 1, **caractérisé en ce que** le profil de tube (136,138) présente une allure générale de U.

3. Échangeur de chaleur selon la revendication 2, **caractérisé en ce que** les branches du U s'étendent en formant des ondulations, et **en ce que** les ondulations des branches sont complémentaires.

4. Échangeur de chaleur selon l'une des revendications 1 à 3, **caractérisé en ce que** le profil de chaque réservoir (140,142,144,146) est complémentaire d'une partie au moins du profil d'un tube (136,138).

5. Échangeur de chaleur selon l'une des revendications 2 à 4, **caractérisé en ce qu'**un profil de réservoir (140,142) est découpé à chaque fois entre les branches du U et extérieurement à chaque branche du U.

6. Échangeur de chaleur selon l'une des revendications 1 à 4, **caractérisé en ce que** ledit élément d'échange thermique est constitué en outre d'une seconde plaque intermédiaire intercalée (132), dans laquelle sont découpés au moins un profil de tube (138) et un profil de réservoir (142,146).

7. Échangeur de chaleur selon la revendication 6, **caractérisé en ce qu'**une plaque intermédiaire de fermeture (134) est prévue intercalée entre les première (130) et seconde plaques (132) intermédiaires.

8. Échangeur de chaleur selon la revendication 7, **caractérisé en ce que** la plaque intermédiaire de fermeture (134) comprend au moins une série de trous (150,152,154) mettant en communication au moins un profil de tube (136,138) et/ou au moins un profil de réservoir (140,142,144,146) de chacune des première (130) et seconde (132) plaques intermédiaires.

9. Échangeur de chaleur selon l'une des revendications 1 à 8, **caractérisé en ce que** les plaques de fermeture (128) présentent au moins un trou (156) en communication avec un profil de tube (136,138), et **en ce que** ces plaques présentent en outre un trou supplémentaire (158) en communication avec un réservoir (140,142,144,146).

10. Échangeur de chaleur comprenant une pluralité de tubes (176B,178B) de circulation de fluide caloporteur, les extrémités desdits tubes débouchant dans des collecteurs (166), des réservoirs (180,182) de matériau de stockage thermique en contact avec les tubes (176B, 178B) de manière que le matériau de stockage et le fluide caloporteur échangent de la chaleur entre eux, et
une pluralité d'éléments d'échange thermique (168) logeant chacun au moins un réservoir (180,182) et au moins un tube (176B,178B), intercalés,
**caractérisé en ce que** ledit élément d'échange thermique (168) comprenant deux joues (170, 172) en appui mutuel et une plaque de distribution intermédiaire (174) intercalée entre les joues (170, 172),
et **en ce que** chaque joue (170, 172) présentant au moins un premier enfoncement (176, 178) couvert par la plaque de distribution intermédiaire (174) de manière à former un tube de circulation de fluide (176B, 178B) et au moins un second enfoncement (180, 182) couvert par la plaque de distribution (174) de manière à former un réservoir.

11. Échangeur de chaleur selon la revendication 10, **caractérisé en ce que** chaque joue (170, 172) présente un second enfoncement (180, 182) couvert par la plaque de distribution intermédiaire (174) de manière à former un réservoir.

12. Échangeur de chaleur selon l'une des revendications 10 et 11, **caractérisé en ce que** la plaque de distribution intermédiaire (174) présente au moins un trou coïncidant à la fois avec le premier enfoncement (176) d'une joue (170) et le premier enfoncement (178) de l'autre joue (172).

13. Échangeur de chaleur selon l'une des revendications 11 et 12, **caractérisé en ce que** la plaque de distribution intermédiaire (174) présente au moins un trou coïncidant à la fois avec un second enfoncement (180, 182) d'une joue (170) et un second enfoncement (180, 182) de l'autre joue (172).

14. Échangeur de chaleur selon l'une des revendications 10 à 13, **caractérisé en ce que** le premier enfoncement (176, 178) présente une allure générale de U.

15. Échangeur de chaleur selon la revendication 14, **caractérisé en ce qu'**un second enfoncement central (180) est ménagé entre des branches dudit U.

16. Échangeur de chaleur selon la revendication 15 rattachée à la revendication 11, **caractérisé en ce que** la plaque de distribution intermédiaire (174) présente au moins un trou coïncidant avec le second enfoncement central (180) d'une joue (170, 172) et au moins un second enfoncement (182) de l'autre joue (170, 172) d'un même élément d'échange thermique.

17. Échangeur de chaleur selon la revendication 16, **caractérisé en ce que** chaque joue présente un second enfoncement central (180) et **en ce que** la plaque de distribution intermédiaire (174) présente au moins un trou coïncidant avec le second enfoncement central (180) de chacune des joues (180) d'un élément d'échange thermique.

18. Échangeur de chaleur selon l'une des revendications 10 à 17, **caractérisé en ce que** le premier enfoncement (176, 178) s'étend en formant des oscillations.

19. Échangeur de chaleur selon l'une des revendications 10 à 18, **caractérisé en ce que** la surface d'une joue (170, 172) laissée libre par le premier enfoncement (176) est sensiblement totalement couverte de seconds enfoncements (180, 182).

20. Échangeur de chaleur selon l'une des revendications 10 à 19, **caractérisé en ce que** la joue (170, 172) présente au moins un orifice (184) débouchant dans le premier enfoncement (176).

21. Échangeur de chaleur selon l'une des revendications 10 à 20, **caractérisé en ce que** la joue (170, 172) présente au moins un orifice (194) débouchant dans un second enfoncement (180), ledit orifice servant aù remplissage du réservoir.

22. Échangeur de chaleur selon la revendication 20, **caractérisé en ce qu'**il comprend au moins un raccord (168) interposé entre deux joues (170,172) d'éléments d'échange thermique (168) adjacents, ledit raccord (168) présentant un orifice (200) de forme adaptée à l'orifice (184) desdites joues (170,172) débouchant dans le premier enfoncement (176) pour permettre une circulation de fluide d'un élément d'échange thermique (168) à l'autre.

23. Échangeur de chaleur selon la revendication 22 rattachée à la revendication 21, **caractérisé en ce que** le raccord présente en outre un orifice (202) de forme adaptée à l'orifice (194) débouchant dans le second enfoncement (180).

24. Échangeur de chaleur selon la revendication 1, **caractérisé en ce que** chaque élément d'échange thermique comprend une pluralité de tubes de circulation de fluide caloporteur (216) et une pluralité de réservoirs de stockage thermique (226) intercalés.

25. Échangeur de chaleur selon la revendication 24, **caractérisé en ce que** les tubes de circulation de fluide caloporteur (216) sont disposés en quinconce et **en ce que** les tubes de circulation de fluide (216) et les réservoirs de stockage thermique (226) sont disposés de manière alternée.

26. Échangeur de chaleur selon l'une des revendications précédentes, **caractérisé en ce que** le fluide caloporteur est un fluide de type réfrigérant et que le matériau de stockage thermique est un matériau de stockage de frigories.

## Claims

1. Heat exchanger comprising a plurality of tubes (136, 138) used to circulate heat conductive fluid, wherein the ends of said tubes (136, 138) open out into manifolds (148, 160, 166) of heat storage material tanks (140, 142, 144, 146) in contact with the tubes (136, 138) so that the storage material and the heat conductive fluid exchange heat with one another, and a plurality of heat exchanger elements (127), which each house at least one tank (140, 142, 144, 146) and at least one tube (136, 138), fitted in between, **characterised in that** said heat exchange element (127) is formed by two sealing plates (128) and at least one first intermediate plate (130, 132) fitted in between, into which at least one tube profile (136, 138) and at least one tank profile (140, 142, 144, 146) are cut out.

2. Heat exchanger according to claim 1, **characterised in that** the tube (136, 138) profile is generally U shaped.

3. Heat exchanger according to claim 2, **characterised in that** the branches of the U extend in a wave pattern, and **in that** the waves of the branches match one another.

4. Heat exchanger according to any of claims 1 to 3, **characterised in that** the profile of each tank (140, 142, 144, 146) matches at least part of the profile of a tube (136, 138).

5. Heat exchanger according to any of claims 2 to 4, **characterised in that** the profile of a tank (140, 142) is cut out each time between the branches of the U and on the outside of each branch of the U.

6. Heat exchanger according to any of claims 1 to 4, **characterised in that** said heat exchanger element is further formed by a second intermediate plate, fitted in between (132), into which at least one tube profile (138) and one tank profile (142, 146) are cut out.

7. Heat exchanger according to claim 6, **characterised in that** an intermediate sealing plate (134) is fitted between the first (130) and second (132) intermediate plates.

8. Heat exchanger according to claim 7, **characterised in that** the intermediate sealing plate (134) comprises at least one series of holes (150, 152, 154) which provide communication between at least one tube (136, 138) profile and/or at least one tank profile (140, 142, 144, 146) of each of the first (130) and second (132) intermediate plates.

9. Heat exchanger according to any of claims 1 to 8, **characterised in that** the intermediate sealing plates (128) have at least one hole (156) which communicates with a tube (136, 138) profile and/or **in that** these plates further have an additional hole (158) which communicates with a tank (140, 142, 144, 146).

10. Heat exchanger comprising a plurality of tubes (176B, 178B) used to circulate heat conductive fluid, wherein the ends of said tubes (176B, 178B) open out into manifolds (166) of heat storage material tanks in contact with the tubes so that the storage material and the heat conductive fluid exchange heat with one another, and a plurality of heat exchanger elements (168), which each house at least one tank (180, 182) and at least one tube (176B, 178B), fitted in between, **characterised in that** said heat exchange element (168) comprises two side walls (170, 172) in contact with one another and an intermediate distribution plate (174) fitted between the side walls (170, 172), and **in that** each side wall (170, 172), has at least one first recess (176, 178) covered by the intermediate distribution plate (174) so as to form a fluid circulation tube (176B, 178B) and at least one second recess (180, 182) covered by the distribution plate (174) so as to form a tank.

11. Heat exchanger according to claim 10, **characterised in that** each side wall (170, 172) has a second recess (180, 182) covered by the intermediate distribution plate (174) so as to form a tank.

12. Heat exchanger according to any of claims 10 or 11, **characterised in that** the intermediate distribution plate (174) has at least one hole that is aligned with both the first recess (176) of a side wall (170) and the first recess (178) of the other side wall (172).

13. Heat exchanger according to any of claims 11 or 12, **characterised in that** the intermediate distribution plate (174) has at least one hole that is aligned with both the second recess (180, 182) of a side wall (170) and the second recess (180, 182) of the other side wall (172).

14. Heat exchanger according to any of claims 10 to 13, **characterised in that** the first recess (176, 178) is generally U shaped.

15. Heat exchanger according to claim 14, **characterised in that** a second central recess (180) is made between the branches of said U shape.

16. Heat exchanger according to claim 15, attached to claim 11, **characterised in that** the intermediate distribution plate (174) has at least one hole that is aligned with the second central recess (180) of a side wall (170, 172) and at least one second recess (182) of the other side wall (170, 172) of a same heat exchanger element.

17. Heat exchanger according to claim 16, **characterised in that** each side wall has a second central recess (180) and **in that** the intermediate distribution plate (174) has at least one hole that is aligned with the second central recess (180) of each of the side walls (180) of a heat exchanger element.

18. Heat exchanger according to any of claims 10 to 17, **characterised in that** the first recess (176, 178) extends in a wave pattern.

19. Heat exchanger according to any of claims 10 to 18, **characterised in that** the surface of a side wall (170, 172) that is left free by the first recess (176) is substantially completely covered by second recesses (180, 182).

20. Heat exchanger according to any of claims 10 to 19, **characterised in that** the side wall (170, 172) has at least one orifice (184) which opens out into the first recess (176).

21. Heat exchanger according to any of claims 10 to 20, **characterised in that** the side wall (170, 172) has at least one orifice (194) which opens out into a second recess (180), wherein said orifice is used to fill the tank.

22. Heat exchanger according to any of claims 20, **characterised in that** it comprises at least one connector (168) fitted between two side walls (170, 172) of adjacent heat exchanger elements (168), wherein said connector (168) has an orifice (200) adapted to the orifice (184) of said side walls (170, 172) that open out into the first recess (176) to permit the circulation of fluid from one heat exchanger element (168) to another.

23. Heat exchanger according to claim 22, attached to claim 21, **characterised in that** the connector further has an orifice (202) whose shape is adapted to the orifice (194) which opens out into the second recess (180).

24. Heat exchanger according to claim 1, **characterised in that** each heat exchanger element comprises a plurality of tubes (216) used to circulate heat conductive fluid, and a plurality of heat storage material tanks (226) fitted in between.

25. Heat exchanger according to claim 24, **characterised in that** the tubes (216) used to circulate heat conductive fluid are positioned in staggered rows and **in that** the tubes (216) used to circulate heat conductive fluid and the heat storage material tanks (226) are positioned alternately.

26. Heat exchanger according to any of the previous claims, **characterised in that** the heat conductive fluid is a refrigerating type fluid and **in that** the heat storage material is a refrigerating storage material.

## Patentansprüche

1. Wärmetauscher, umfassend eine Vielzahl von Rohren (136, 138) zum Umlauf von Wärmeübertragungsflüssigkeit, wobei die Enden der Rohre (136, 138) in Kollektoren (148, 160, 166), Behältern (140, 142, 144, 146) aus Wärmespeichematerial in Kontakt mit den Rohren (136, 138), so dass das Speichermaterial und die Wärmeübertragungsflüssigkeit Wärme untereinander austauschen, und eine Vielzahl von Wärmeaustauschelementen (127) mündet, die jeweils mindestens einen Behälter (140, 142, 144, 146) und mindestens ein Rohr (136, 138) aufnehmen, die eingeschoben sind, **dadurch gekennzeichnet, dass** das Wärmeaustauschelement (127) aus zwei Abdeckplatten (128) und mindestens einer ersten Zwischenplatte (130, 132), die eingeschoben ist, gebildet ist, in der mindesten ein Rohrprofil (136, 138) und mindestens ein Behälterprofil (140, 142, 144, 146) ausgeschnitten sind.

2. Wärmetauscher nach Anspruch 1, **dadurch gekennzeichnet, dass** das Rohrprofil (136, 138) den allgemeinen Verlauf eines U aufweist.

3. Wärmetauscher nach Anspruch 2, **dadurch gekennzeichnet, dass** sich die Schenkel des U ausbreiten, indem sie Wellen bilden, und **dadurch**, dass sich die Wellen der Schenkel ergänzen.

4. Wärmetauscher nach einem der Ansprüche 1 bis 3, **dadurch gekennzeichnet, dass** das Profil jedes Behälters (140, 142, 144, 146) mindestens einen Teil des Profils eines Rohrs (136, 138) ergänzt.

5. Wärmetauscher nach einem der Ansprüche 2 bis 4, **dadurch gekennzeichnet, dass** ein Behälterprofil (140, 142) jedes Mal zwischen den Schenkeln des U und außerhalb jedes Schenkels des U ausgeschnitten ist.

6. Wärmetauscher nach einem der Ansprüche 1 bis 4, **dadurch gekennzeichnet, dass** das Wärmeaustauschelement außerdem aus einer zweiten eingeschobenen Zwischenplatte (132) gebildet ist, in der mindestens ein Rohrprofil (138) und ein Behälterprofil (142, 146) ausgeschnitten ist.

7. Wärmetauscher nach Anspruch 6, **dadurch gekennzeichnet, dass** eine Zwischen-Abdeckplatte (134) vorgesehen ist, die zwischen der ersten (130) und der zweiten (132) Zwischenplatte eingeschoben ist.

8. Wärmetauscher nach Anspruch 7, **dadurch gekennzeichnet, dass** die Zwischen-Abdeckplatte (134) mindestens eine Reihe von Löchern (150, 152, 154) umfasst, die mindestens ein Rohrprofil (136, 138) und/oder mindestens ein Behälterprofil (140, 142, 144, 146) jedes der ersten (130) und zweiten (132) Zwischenplatte miteinander in Verbindung bringen.

9. Wärmetauscher nach einem der Ansprüche 1 bis 8, **dadurch gekennzeichnet, dass** die Abdeckplatten (128) mindestens ein Loch (156) aufweisen, das mit einem Rohrprofil (136, 138) in Verbindung steht, und **dadurch**, dass diese Platten außerdem ein zusätzliches Loch (158) aufweisen, das mit einem Behälter (140, 142, 144, 146) in Verbindung steht.

10. Wärmetauscher, umfassend eine Vielzahl von Rohren (176B, 178B) zum Umlauf von Wärmeübertragungsflüssigkeit, wobei die Enden der Rohre in Kollektoren (166), Behälter (180, 182) aus Wärmespeichermaterial in Kontakt mit den Rohren (176B, 178B), so dass das Wärmespeichermaterial und die Wärmeübertragungsflüssigkeit die Wärme untereinander austauschen, und
eine Vielzahl von Wärmeaustauschelementen (168) münden, die jeweils mindestens einen Behälter (180, 182) und mindestens ein Rohr (176B, 178B), die eingeschoben sind, aufnehmen, **dadurch gekennzeichnet, dass** das Wärmeaustauschelement (168) zwei Backen (170, 172), die sich gegenseitig stützen, und eine Zwischen-Verteilerplatte (174) umfassen, die zwischen den Backen (170, 172) eingeschoben ist,
und **dadurch**, dass jede Backe (170, 172) mindestens eine erste Vertiefung (176, 178) aufweist, abgedeckt von der Zwischen-Verteilerplatte (174), um ein Rohr zum Umlauf der Flüssigkeit (176B, 178B) zu bilden, und mindestens eine zweite Vertiefung (180, 182), abgedeckt von der Verteilerplatte (174), um einen Behälter zu bilden.

11. Wärmetauscher nach Anspruch 10, **dadurch gekennzeichnet, dass** jede Backe (170, 172) eine zweite Vertiefung (180, 182) aufweist, abgedeckt durch die Zwischen-Verteilerplatte (174), um einen Behälter zu bilden.

12. Wärmetauscher nach einem der Ansprüche 10 und 11, **dadurch gekennzeichnet, dass** die Zwischen-Verteilerplatte (174) mindestens ein Loch aufweist, das gleichzeitig mit der ersten Vertiefung (176) einer Backe (170) und der ersten Vertiefung (178) der anderen Backe (172) zusammenpasst.

13. Wärmetauscher nach einem der Ansprüche 11 und 12, **dadurch gekennzeichnet, dass** die Zwischen-Verteilerplatte (174) mindestens ein Loch aufweist, das gleichzeitig mit einer zweiten Vertiefung (180, 182) einer Backe (170) und einer zweiten Vertiefung (180, 182) der anderen Backe (172) zusammenpasst.

14. Wärmetauscher nach einem der Ansprüche 10 bis 13, **dadurch gekennzeichnet, dass** die erste Vertiefung (176, 178) den allgemeinen Verlauf eines U aufweist.

15. Wärmetauscher nach Anspruch 14, **dadurch gekennzeichnet, dass** eine zweite zentrale Vertiefung (180) zwischen den Schenkeln des U eingebaut ist.

16. Wärmetauscher nach Anspruch 15, abhängig an Anspruch 11, **dadurch gekennzeichnet, dass** die Zwischen-Verteilerplatte (174) mindestens ein Loch aufweist, das mit der zweiten zentralen Vertiefung (180) einer Backe (170, 172) und mindestens einer zweiten Vertiefung (182) der anderen Backe (170, 172) eines gleichen Wärmeaustauschelementes zusammenpasst.

17. Wärmetauscher nach Anspruch 16, **dadurch gekennzeichnet, dass** jede Backe eine zweite zentrale Vertiefung (180) aufweist, und **dadurch**, dass die Zwischen-Verteilerplatte (174) mindestens ein Loch aufweist, das mit der zweiten zentralen Vertiefung (180) jeder der Backen (180) eines Wärmeaustauschelementes zusammenpasst.

18. Wärmetauscher nach einem der Ansprüche 10 bis 17, **dadurch gekennzeichnet, dass** sich die erste Vertiefung (176, 178) ausbreitet, in dem sie Wellen bildet.

19. Wärmetauscher nach einem der Ansprüche 10 bis 18, **dadurch gekennzeichnet, dass** die Oberfläche einer Backe (170, 172), die von der ersten Vertiefung (176) frei gelassen wurde, im Wesentlichen vollständig von zweiten Vertiefungen (180, 182) abgedeckt ist.

20. Wärmetauscher nach einem der Ansprüche 10 bis 19, **dadurch gekennzeichnet, dass** die Backe (170, 172) mindestens eine Öffnung (184) aufweist, die in die erste Vertiefung (176) mündet.

21. Wärmetauscher nach einem der Ansprüche 10 bis 20, **dadurch gekennzeichnet, dass** die Backe (170, 172) mindestens eine Öffnung (194) aufweist, die in eine zweite Vertiefung (180) mündet, wobei die Öffnung dazu dient, den Behälter zu füllen.

22. Wärmetauscher nach Anspruch 20, **dadurch gekennzeichnet, dass** er mindestens ein Verbindungsstück (168) umfasst, das zwischen zwei Backen (170, 172) von benachbarten Wärmeaustauschelementen (168) gestellt ist, wobei das Verbindungsstück (168) eine Öffnung (200) mit einer Form aufweist, die an die Öffnung (184) der Backen (170, 172) angepasst ist, die in die erste Vertiefung (176) mündet, um einen Umlauf von Flüssigkeit von einem Wärmeaustauschelement (168) in das andere zu ermöglichen.

23. Wärmetauscher nach Anspruch 22, abhängig von Anspruch 21, **dadurch gekennzeichnet, dass** das Verbindungsstück außerdem eine Öffnung (202) mit einer Form aufweist, die an die Öffnung (194) angepasst ist, die in die zweite Vertiefung (180) mündet.

24. Wärmetauscher nach Anspruch 1, **dadurch gekennzeichnet, dass** jedes Wärmeaustauschelement eine Vielzahl von Rohren zum Umlauf von Wärmeübertragungsflüssigkeit (216) und eine Vielzahl von Behältern zur Wärmespeicherung (226), die eingeschoben sind, umfasst.

25. Wärmetauscher nach Anspruch 24, **dadurch gekennzeichnet, dass** die Rohre zum Umlauf von Wärmeübertragungsflüssigkeit (216) versetzt angeordnet sind, und **dadurch**, dass die Rohre zum Umlauf der Flüssigkeit (216) und die Behälter zur Wärmespeicherung (226) auf alternierende Weise angebracht sind.

26. Wärmetauscher nach einem der vorhergehenden Ansprüche, **dadurch gekennzeichnet, dass** die Wärmeübertragungsflüssigkeit eine Flüssigkeit des Typs Kältemittel ist, und dass das Wärmespeichermaterial ein Material zur Speicherung von Frigorien ist.
